Europäisches Patentamt

European Patent Office

Office européen des brevets

(11) Veröffentlichungsnummer: **0 498 219 A2**

# (12) EUROPÄISCHE PATENTANMELDUNG

(21) Anmeldenummer: **92101062.5**

(51) Int. Cl.5: **C08G 75/02**

(22) Anmeldetag: **23.01.92**

(30) Priorität: **05.02.91 DE 4103345**

(43) Veröffentlichungstag der Anmeldung:
**12.08.92 Patentblatt 92/33**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Fischer, Thomas, Dr.**
**Emil-Feinendegenstrasse 2**
**W-4150 Krefeld(DE)**
Erfinder: **Arlt, Wolfgang, Dr.**
**Schönwasserstrasse 230c**
**W-4150 Krefeld 1(DE)**
Erfinder: **Schmidt, Manfred, Dr.**
**Erich-Klausener-Strasse 37**
**W-4150 Krefeld(DE)**

(54) Verfahren zur Isolierung und Reinigung von Polyarylensulfiden.

(57) Die Erfindung betrifft ein Verfahren zur Isolierung und Reinigung von Polyarylensulfiden, vorzugsweise Polyphenylensulfiden, aus ihrem Reaktionsgemisch. Bei dem Verfahren kann auf organisches Lösungsmittel zur Reinigung (Wäsche) des Polymeren verzichtet werden.

EP 0 498 219 A2

EP 0 498 219 A2

Die Erfindung betrifft ein Verfahren zur Isolierung und Reinigung von Polyarylensulfiden, vorzugsweise Polyphenylensulfiden, aus ihrem Reaktionsgemisch. Bei dem Verfahren kann auf organisches Lösungsmittel zur Reinigung (Wäsche) des Polymeren verzichtet werden.

Polyarylensulfide (PAS),ihre Herstellung und Isolierung, sind bekannt (z.B. US-A 2 513 188). In einem polaren, aprotischen Lösungsmittel wird ein Schwefelspender, z.B. Natriumsulfid, mit einem Dichloraromaten, z.B. p-Dichlorbenzol, umgesetzt. In diesem Fall z.B. erhält man Polyphenylensulfid.

Im allgemeinen wird zur Isolierung von Polyarylensulfiden die heterogene, mit Salz beladene PAS-Produktlösung nach der Reaktion mit einem Hilfsstoff vermischt und so das PAS ausgefällt. Die anorganischen Salze werden aus dem gefällten Polyarylensulfid z.B. mit Wasser ausgewaschen. Anschließend kann das bis zu 500 Gew.-% (bezogen auf das Polyarylensulfid) Wasser und/oder andere Extraktionsmittel enthaltende Polymer mechanisch oder bei erhöhter Temperatur, gegebenenfalls im Vakuum, getrocknet werden, (z.B. DE-A 3 713 669).

Den bekannten Verfahren ist gemeinsam, daß das hergestellte Polyarylensulfid ausgefällt bzw. kristallisiert und dann gewaschen wird. Zum Teil wird für den Waschprozeß ein organisches Lösungsmittel eingesetzt (z.B. DE-A 3 713 669, EP-A 140 272, EP-A 166 368).

Diese Aufarbeitungsverfahren haben folgende Nachteile:
- die wässrigen und/oder Organischen Waschlaugen müssen aufgearbeitet (z.B. destilliert) werden;
- das Lösungsmittel der Reaktion, z.B. N-Methylcaprolactam, N-Methylpyrrolidon, kann durch eine Wasserzugabe teilweise gespalten werden;
- das kristallisierte Polymer ist einem Waschprozeß schwer zugänglich;
- salzhaltige Waschflüssigkeiten müssen aufwendig aufgearbeitet werden.

Das erfindungsgemäße Verfahren weicht von diesen Schritten zur Isolierung von PAS, vorzugsweise Polyphenylensulfid aus ihren Reaktionslösungen prinzipiell ab. Die Reaktionslösung nach der Polymerisation wird filtriert und kann so von den mitgebildeten Alkalihalogeniden befreit werden. Das Reaktionslösungsmittel wird abdestilliert und die erhaltene PAS-Schmelze anschließend mit Wasser gewaschen. Die gereinigte PAS-Schmelze wird dann z.B` granuliert oder einer Vakuumextrusion unterworfen.

Gegenstand der Erfindung ist ein Verfahren zur Gewinnung von Polyarylensulfiden aus ihren Reaktionsgemischen, dadurch gekennzeichnet, daß

a) das Reaktionslösungsmittel mit keinem weiteren Waschmittel kontaktiert wird,

b) das Reaktionsgemisch bei gleichbleibender oder steigender Temperatur aufgearbeitet wird, wobei

c) gebildete Salze aus dem Reaktionsgemisch in einem Temperaturbereich abgetrennt werden, dessen untere Temperaturgrenze durch die Temperatur gegeben ist, bei der das gebildete Polyarylensulfid im Reaktionslösungsmittel noch löslich ist, und dessen obere Temperaturgrenze die Temperatur ist, bei der das Reaktionslösungsmittel und das gebildete Polyarylensulfid noch thermisch beständig sind,

d) gebildete, abgetrennte Salze in den unter c) definierten Temperaturgrenzen einer Nachwäsche mit dem Reaktionslösungsmittel unterzogen werden,

e) abgetrennte Salze zur Rückgewinnung des Reaktionslösungsmittels bei einer Temperatur getrocknet werden, deren obere Grenze durch die thermische Stabilität des Reaktionslösungsmittels gegeben ist, und wobei der minimale Druck während der Trocknung durch die Kondensierbarkeit des Reaktionslösungsmittels bestimmt ist,

f) aus dem Filtrat das hergestellte Polymere isoliert wird, das

g) dann als Schmelze vorliegt und einer Wäsche mit Wasser bei $p_H < = 6$ ohne Temperaturabsenkung unterzogen wird, dann

h) die jetzt saure Polyarylensulfid-Schmelze ohne Temperaturabsenkung anschließend unter Druck mit Wasser neutral gewaschen wird,

i) diese neutral gewaschene Polyarylensulfid-Schmelze vom Extraktionsdruck auf 0,001 bis 1 bar, bevorzugt auf 0,01 bis 1 bar entspannt wird und mittels einer Vakuumextrusion oder Direktgranulierung isoliert wird.

Vorzugsweise werden erfindungsgemäß geradkettige oder verzweigte Polyphenylensulfide gereinigt (z.B. EP-A 171 021). Besonders bevorzugt wird geradkettiges oder verzweigtes Poly-phenylensulfid erfindungsgemäß isoliert und gereinigt.

Als Reaktionslösungsmittel werden polare, aprotische organische Lösungsmittel eingesetzt. Bevorzugt werden N-Alkyllactame verwendet. Besonders bevorzugt ist N-Methylcaprolactam (NMC).

Bei Schritt b) beträgt die Temperatur 200 bis 400°C, bevorzugt 220-340°C. Die Temperatur kann während der Durchführung des Schrittes b konstant gehalten werden oder innerhalb der genannten Bereiche von unten nach oben ansteigen.

Im Schritt c) werden bei der Reaktion entstandene Salze, z.B. Kochsalz, und restliche Alkalisulfide in

2

dem bei b) genannten Temperaturbereich abgetrennt.

Die Schritte d) und e) werden ebenfalls in dem bei Schritt f) genannten Temperaturbereich durchgeführt.

Bei Schritt e) beträgt der Druck 1 bis 2000 mbar.

Figur (Abbildung) 1 zeigt den erfindungsgemäßen Verfahrensweg. Er ist dadurch gekennzeichnet, daß die Reaktionslösung nicht wie bisher bekannt abgekühlt wird, sondern im Laufe des Aufarbeitungsverfahrens die Temperatur erhöht wird (aniothermes Verfahren).

Aus der Reaktionslösung der Reaktion (Kennzeichnung 1 in Abb.1) wird das gebildete Salz in (2) abgetrennt, z.B. durch Filtrationsverfahren (z.B. EP-A 220 490).

Die dort beschriebenen Druckfiltration läßt jedoch nur geringe Schichtdicken zu. Eine Dekantierung ist ebenfalls nicht vorteilhaft, weil eine Maschine mit drehenden Teilen bei den gewählten Temperaturbedingungen und dem abrasiv wirkenden Alkalihalogenid schnell verschleißt.

Das erfindungsgemäße Verfahren vermeidet diese Nachteile und Probleme. Sie werden gelöst durch den speziellen Aufbau des Filters und die Ausnutzung der Tiefenfiltration.

Geeignete Filter werden beschrieben in:

1. H. Wilke, Chem.-Ing.-Techn. 30 (1958), S. 219-222,

2. M. Apperlo, Chemiker Zeitung 91 (1967), S. 440-445,

3. Anonym, Chemieanlagen und Verfahren, April (1987), S. 94.

Die Ausnutzung der Tiefenfiltration mit den beschriebenen Filtern ermöglicht die Abtrennung von Teilchen, die kleiner als der größte Durchmeser der Filtrationsschicht sind. Der am Anfang der Filtration vorhandene Trüblauf wird wieder vor das Filter zurückgeführt, bis Klarlauf erfolgt.

Um Reste von Polyarylensulfiden aus dem abgetrennten Salz gewinnen zu können, kann das abgetrennte Salz - bevorzugt am Ort der Filtration - mit reinem, heißen Reaktionslösungsmittel gewaschen werden (Verdrängungswäsche).

In einem zweiten Schritt wird der am Filter anhaftende Filterkuchen mit einem inerten Gas, z.B. Stickstoff, durchströmt und vom Reaktionslösungsmittel und dem darin gelöstem PAS weitgehend befreit.

Als Filter kann z.B. ein Apparat gewählt werden, der

a) ohne bewegte Teile auskommt,

b) die Nachwäsche mit heißem Reaktionslösungsmittel auf dem Filter erlaubt,

c) eine Tiefenfiltration ermöglicht,

d) rückspülbar und

e) beheizbar ist.

In einem dritten Schritt wird der fast trockene Kuchen abgelöst (z.B. durch Anlegen von Überdruck bis zu 10 bar).

Sind hohe Anforderungen an die Reinheit des Alkalihalogenid-Filterkuchens bezüglich Restpolymergehalt gestellt, kann der Filterkuchen einer erneuten Wäsche mit dem Reaktionslösungsmittel bei gleicher Temperatur wie die der Filtration unterzogen werden (3). Dabei wird der Filterkuchen im Reaktionslösungsmittel suspendiert und erneut dem beschriebenen Filtrationsprozeß unterworfen.

Zur Wiedergewinnung der Reaktionslösungsmittelreste im gewaschenen Filterkuchen wird eine Salztrocknung (4) angeschlossen, z.B. in einem Drehrohrofen oder in einer Paddelschnecke. Hier wird der Filterkuchen Temperaturen ausgesetzt, die oberhalb der Siedetemperatur des reinen Reaktionslösungsmittels liegen. Weiterhin kann zur Verbesserung der Ausdampfung Vakuum angelegt werden. Der anzuwendende Druck wird durch den Dampfdruck des verwendeten Reaktionslösungsmittels bestimmt und liegt minimal bei dem Druck, den es als reiner Stoff bei 60°C hätte.

Das aus der Salztrocknung erhaltene Salz ist weitgehend frei von organischen Komponenten und kann z.B. zur Rückgewinnung der Einsatzstoffe Chlor und Natronlauge rezyklisiert werden. Kreisprozesse für die Reaktionseinsatzstoffe werden dadurch ermöglicht.

Das in Lösung abgetrennte Polymer (2), das weitgehend salzfrei ist, wird so isoliert, z.B. durch Eindampfung, die ein- oder mehrstufig (bis zu 5 Stufen), ausgelegt sein kann, wobei das Polymer als Schmelze anfällt. Lösungen aus Polyarylensulfiden und Reaktionslösungsmitteln sind erfindungsgemäß bei stetig steigender Temperatur und bei ständig steigender Viskosität eindampfbar.

Das erfindungsgemäße Verfahren ist hier besonders vorteilhaft, weil die Abtrennung im alkalischen Milieu des Reaktionsgemisches stattfinden kann. An den verwendeten Werkstoffen für die Apparaturen werden, verglichen mit einer Eindampfung in saurem Milieu, geringere Korrosionserscheinungen festgestellt. Weiterhin ist besonders vorteilhaft, daß das alkalische Milieu viele Stoffe (z.B. HCl, $H_2S$, phenolische Kettenabbrecher), die in der Reaktionslösung enthalten sein können, am Ausgasen hindert. Das gewonnene Destillat ist daher direkt in einer Folgereaktion als Reaktionslösungsmittel wieder einsetzbar.

Weiterhin ist das erfindungsgemäße Verfahren besonders vorteilhaft, weil das Reaktionslösungsmittel nicht mit Waschmitteln gemischt worden ist. Dadurch wird ein ökonomischer Vorteil erreicht, da die aufwendige Aufarbeitung des so erhaltenen Gemisches aus Waschmittel und Reaktionslösungsmittel entfällt und auch ein chemischer Teilabbau des Reaktionslösungsmittels durch Reaktion mit dem Waschmittel - z.B. mit Wasser - vermieden wird.

Aus Stufe (5) fließt die vom Reaktionslösungsmittel weitgehend befreite Polyarylensulfid-Schmelze einer sauren Wasserwäsche (z.B. mit verdünnter HCl) zu (6). Dazu wird die Polyarylensulfid-Schmelze mit einer wäßrigen Lösung einer Säure ohne Temperaturabsenkung bei Drücken um 100 bar und bei einem $p_H < 6$ kontaktiert. Der Vorteil dieser Ansäuerung gegenüber der literaturbekannten Ansäuerung einer Suspension von Polyarylensulfiden in Wasser besteht darin, daß beide Phasen - die Schmelze und die wässrige Säure - innig vermischt werden können.

Einschlüsse von Verunreinigungen, die später Ursache für die Minderung der PAS-Qualität - z.B. durch Aschebildung - sein können, werden so vermieden. Zusätzlich ist dieser erfindungsgemäße Verfahrensschritt dadurch gekennzeichnet, daß der Waschprozeß ohne großen Zeitaufwand durchführbar ist.

Die saure Wäsche kann z.B. in einem gerührten Autoklaven, in einem statischen Mischer oder in einer Druck-Extraktionskolonne durchgeführt werden.

Die Trennung der gemischten Phasen wird in einem geeigneten Absetzbehälter, z.B. einem Abscheider isobar vorgenommen.

In einem Folgeschritt wird im gleichen Apparat das sauer gestellte Polymer möglichst isobar und isotherm einer oder mehreren Wäschen mit neutralem Wasser unterzogen, um Reste der Säure zu entfernen.

Die Wäsche kann im gleichen oder in einem separaten Apparat vorgenommen werden. Das erhaltene Waschwasser aus beiden Schritten wird vom Extraktionsdruck auf Normaldruck entspannt (6). Im Waschwasser sind Reste der gebildeten Salze, Reaktionslösungsmittel sowie gegebenenfalls entstandene Nebenprodukte enthalten.

Der bei der Entspannung auftretende Wasserdampf wird kondensiert, die verbrauchte Säure wird ersetzt. Dann wird dieser Strom erneut als Waschmedium eingesetzt. Der erhaltene Rückstand wird einer geordneten Entsorgung (z.B. Verbrennung, Deponie) zugeführt.

Die neutral gewaschene und von der wässrigen Phase getrennte Polymerschmelze wird vom Extraktionsdruck auf Normaldruck entspannt (7). Dabei werden Spuren von gelöstem Wasser verdampft. Die Polymerschmelze kann anschließend nach üblichen Methoden, z.B. mittels Extrusion, aufgearbeitet werden. Vorteilhaft ist die Verwendung eines Ausdampfextruders, wobei das PAS nach einer Vakuumextrusion als Granulat erhalten werden kann. Die Polymerschmelze kann auch direkt mittels einer Schmelzepumpe über eine Spinndüse einer Granulierung zugeführt werden.

Die Temperaturen der einzelnen Verfahrensschritte richten sich nach dem gewählten Reaktionslösungsmittel und dem hergestellten Polyarylensulfid.

Beispiele

Beispiel 1

Ein nach Beispiel 1 der DE-A 3 839 441 hergestelltes Polyphenylensulfid (PPS) wurde bei einer Temperatur von 235°C einem auf 250°C erhitzten Filter zugeführt. Das Lösungsmittel war in diesem Fall N-Methylcaprolactam.

| Analysen | | |
|---|---|---|
| | Filtrat | Filterrückstand |
| PPS | 1390 g | 242 g |
| Lösungsmittel | 4860 g | 860 g |
| Kochsalz | 6 g | 1586 g |

Der erhaltene Filterrückstand wurde einer erneuten Anmaischung mit der doppelten Lösungsmittelmenge (Basis : Filterrückstandsmenge) bei 235°C unterworfen und erneut filtriert. Der jetzt erhaltene Filterrückstand wurde mit der einfachen Lösungsmittelmenge (Basis : Filterrückstandsmenge) in einer Verdrängungswäsche gewaschen.

| Analysen | |
|---|---|
| | Filterrückstand |
| PPS | n.n.* |
| Lösungsmittel | 30% |
| Kochsalz | 70% |

*n.n. = nicht nachweisbar, Nachweisgrenze: 1% PPS

### Beispiel 2

Das in Beispiel 1 gewonnene Filtrat wurde eingedampft.

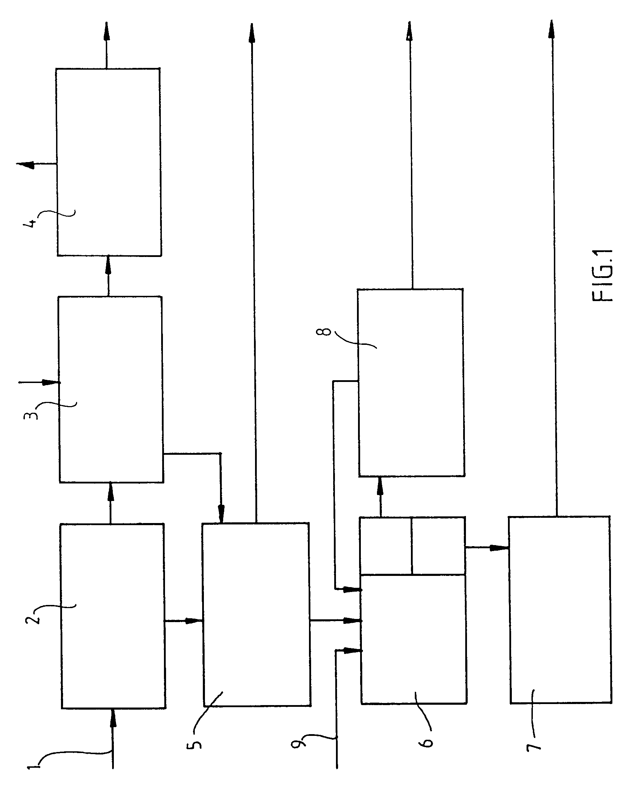

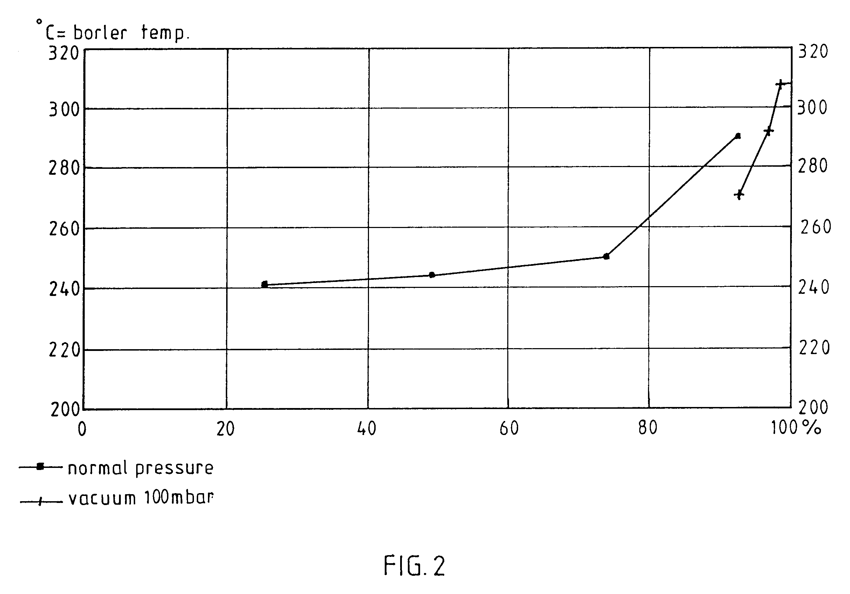

Abb.2 (Fig. 2) zeigt die erhaltene Eindampfkurve. Es ist ersichtlich, daß die Filtratlösung mit der gewählten Versuchsanordnung bis zu einem Gehalt von 98 Gew-% PPS eingedampft werden kann. Eine Steigerung der Eindampfrate ist generell durch Temperaturerhöhung oder Druckabsenkung möglich. Das erhaltene Destillat kann im Kreis geführt werden.

### Beispiel 3

Die in Beispiel 2 erhaltene wasserfreie PPS-Schmelze wurde unter Druck mit verdünnter Säure = Salzsäure (pH4) gewaschen und anschließend mit Wasser neutral gewaschen.

| Daten | |
|---|---|
| Temperatur | 300°C |
| Druck | 100bar |
| Molgewicht des Polymers vor Behandlung | $M_w = 38148$ |
| Molgewicht des Polymers nach Behandlung | $M_w = 39135$ |
| (Molgewichtsbestimmung wie in DE-A 3839441 beschrieben) | |

## Patentansprüche

1. Verfahren zur Gewinnung von Polyarylensulfiden aus ihren Reaktionsgemischen, dadurch gekennzeichnet, daß

a) das Reaktionslösungsmittel mit keinem weiteren Waschmittel kontaktiert wird,

b) das Reaktionsgemisch bei gleichbleibender oder steigender Temperatur aufgearbeitet wird, wobei

c) gebildete Salze aus dem Reaktionsgemisch in einen Temperaturbereich abgetrennt werden, dessen untere Temperaturgrenze durch die Temperatur gegeben ist, bei der das gebildete Polyarylensulfid im Reaktionslösungsmittel noch löslich ist, und dessen obere Temperaturgrenze durch die Temperatur bestimmt wird, bei der das Reaktionslösungsmittel und das gebildete Polyarylensulfid noch thermisch beständig sind,

d) gebildete, abgetrennte Salze in den unter c) definierten Temperaturgrenzen einer Nachwäsche mit dem Reaktionslösungsmittel unterzogen werden,

e) abgetrennte Salze zur Rückgewinnung des Reaktionslösungsmittels in einem Temperaturbereich getrocknet werden, dessen obere Grenze durch die thermische Stabilität des Reaktionslösungsmittels gegeben ist, und wobei der minimale Druck während der Trocknung durch die Kondensierbarkeit des Reaktionslösungsmittels bestimmt ist,

f) aus dem Filtrat das hergestellte Polymere isoliert wird, das

g) dann als Schmelze vorliegt und einer Wäsche mit Wasser bei $p_H < = 6$ ohne Temperaturabsenkung unterzogen wird, dann

h) die jetzt saure Polyarylensulfid-Schmelze ohne Temperaturabsenkung anschließend mit Wasser neutral gewaschen wird,

i) diese neutral gewaschene Polyarylensulfid-Schmelze vom Extraktionsdruck auf 0,001 bis 1 bar, bevorzugt auf 0,01 bis 1 bar entspannt wird und mittels einer Vakuumextrusion oder Direktgranulierung isoliert wird.

2. Verfahren nach Anspruch 1, dadurch gekennzeichnet, daß das Reaktionsgemisch bei einer Temperatur von 225 bis 250°C und bei einem Druck von 1 bis 10 bar filtriert wird und das abfiltrierte Alkalihalogenid nach Suspension im Reaktionslösungsmittel wiederholt unter diesen Temperatur-/Druckbedingungen filtriert wird.

3. Verfahren nach Anspruch 1, dadurch gekennzeichnet, daß als Filter ein Apparat gewählt wird, der
   a) ohne bewegte Teile auskommt,
   b) die Nachwäsche mit heißem Reaktonslösungsmittel auf dem Filter erlaubt,
   c) eine Tiefenfiltration ermöglicht,
   d) rückspülbar und
   e) beheizbar ist.

4. Verfahren nach Anspruch 1, dadurch gekennzeichnet, daß das Reaktionslösungsmittel N-Methylcaprolactam ist.

5. Verfahren nach Anspruch 1, dadurch gekennzeichnet, daß das Lösungsmittel N-Methylpyrrolidon ist.

6. Verfahren nach Anspruch 1, dadurch gekennzeichnet, daß das aufgearbeitete Polyarylensulfid Polyphenylensulfid ist.

7. Verfahren nach Anspruch 1, dadurch gekennzeichnet, daß der getrocknete Alkalihalogenid-Flltrationskuchen einer Wiederverwendung zugeführt wird.

FIG.1

°C = borler temp.

normal pressure
vacuum 100mbar

FIG. 2

EP 0 498 219 A2